## Europäisches Patentamt

## European Patent Office

## Office européen des brevets

(19)

(11) Veröffentlichungsnummer: **0 015 571**
**B1**

(12) # EUROPÄISCHE PATENTSCHRIFT

(45) Veröffentlichungstag der Patentschrift:
18.05.83

(51) Int. Cl.³: **F 16 H 15/30**

(21) Anmeldenummer: 80101167.7

(22) Anmeldetag: 07.03.80

(54) **Stufenlos regelbares Getriebe.**

(30) Priorität: **12.03.79 DE 2909581**

(43) Veröffentlichungstag der Anmeldung:
**17.09.80 Patentblatt 80/19**

(45) Bekanntmachung des Hinweises auf die Patenterteilung:
**18.05.83 Patentblatt 83/20**

(84) Benannte Vertragsstaaten:
**AT BE CH DE FR GB IT NL SE**

(56) Entgegenhaltungen:
**DD-A-105 655**
**FR-A-1 108 955**
**FR-A-1 245 647**
**FR-A-1 252 806**
**FR-E-68 981**
**US-A-2 020 123**
**US-A-2 682 776**
**US-A-4 112 781**

(73) Patentinhaber: **Broziat, Horst, Vorwerker Strasse 62a,
D-2400 Lübeck (DE)**

(72) Erfinder: **Broziat, Horst, Vorwerker Strasse 62a,
D-2400 Lübeck (DE)**

(74) Vertreter: **Wilcken, Thomas, Dipl.-Ing. et al,
Musterbahn 1, D-2400 Lübeck (DE)**

ACTORUM AG

## Stufenlos regelbares Getriebe

Die Erfindung betrifft ein stufenlos regelbares Getriebe mit einem ersten Übertragungsglied, dieses bestehend aus einem drehbaren Träger mit auf einem Kreis angeordneten, anschlagbegrenzten, frei drehbaren Querrollen, deren verlängerte radiale Mittelebene durch die Trägerdrehachse verläuft, und mit einem zweiten Übertragungsglied mit einer sphärisch gekrümmten Arbeitsfläche, an der die Querrollen reibschlüssig angreifen, wobei die gewünschte Drehzahl des jeweils mit der Abtriebswelle verbundenen Übertragungsgliedes durch Änderung der Relativstellung der beiden Übertragungsglieder zueinander einstellbar ist.

Ein derartiges Getriebe ist in der französischen Patentschrift 1 252 806 beschrieben. Bei diesem Getriebe werden die Querrollen mittels Federkraft ständig gegen die sphärisch gekrümmte Arbeitsfläche des anderen Übertragungsgliedes gedrückt, wobei die Feder so abgestimmt ist, dass immer ein ausreichender Normaldruck zur Aufrechterhaltung des Reibschlusses zwischen den beiden Übertragungsgliedern gegeben ist. Mit diesem Getriebe ist es zwar möglich, dass die Ausgangsdrehzahl bei unveränderter Eingangsdrehzahl von ihrem Maximalwert stufenlos auf Stillstand herabgeregelt wird, unter gleichzeitiger Erzielung einer Drehrichtungsumkehr der Ausgangswelle, wieder bis auf etwa 20% des Eingangsdrehzahlwertes heraufgeregelt werden kann. Nachteilig ist es aber, dass ein Stillstand der Ausgangswelle bei laufender Eingangswelle nur erreicht werden kann, wenn auf den angedeuteten Drehzahlwert Null herabgeregelt wird, was zeitraubend und umständlich ist.

Die Aufgabe der Erfindung besteht in der Schaffung eines Getriebes der angegebenen Art, die es erlaubt, dass bei jedem Drehzahlwert der Ausgangswelle eine Unterbindung des Reibschlusses der erwähnten Übertragungsglieder herbeigeführt werden kann.

Die Lösung der Aufgabe geht von dem einleitend angeführten Getriebe aus und kennzeichnet sich dadurch, dass die Achslage der Querrollen im Querrollenträger willkürlich radial veränderbar ist.

Hierdurch ist es auf einfache Weise ermöglicht, den Kraftschluss zwischen den beiden Übertragungsgliedern bei unveränderter Eingangsdrehzahl und gerade eingeregelter Ausgangsdrehzahl zu unterbrechen, so dass die Ausgangswelle sofort zum Stillstand kommt und nicht erst auf die vorbekannte Weise auf den Drehzahlwert Null herabgeregelt werden muss. Soll der Kraftschluss wieder hergestellt werden, so ist dies durch umgekehrte Veränderung der Achslage der Querrollen des Querrollenträgers möglich und die vorher eingeregelte Ausgangsdrehzahl ist sofort wieder verfügbar.

Ein Anwendungsbereich eines solchen Getriebes ist z.B. der Fahrzeugbau. Es können sparsame Motoren eingesetzt werden, die den Nachteil haben, dass sie relativ unelastisch sind. In Verbindung mit Automatikgetrieben lässt sich ein sehr wirtschaftlicher Betrieb erreichen. Des weiteren kann das Getriebe relativ billig hergestellt werden, da in grossem Umfange Normteile zu seiner Herstellung verwendet werden. Ferner kann es mit den heute üblichen Mitteln zur manuellen oder automatischen Regelung betrieben werden. Ein weiterer Vorteil besteht darin, dass das Getriebe auch als Regelgetriebe in der Regeltechnik eingesetzt werden kann.

Die Erfindung ist nachstehend anhand mehrerer, in den anliegenden Zeichnungen dargestellter Ausführungsbeispiele näher erläutert. Es zeigen:

Fig. 1 eine erste Ausführungsform eines Getriebes im Axialschnitt, und zwar in einer Stellung, in welcher das treibende Übertragungsglied seine Drehzahl unverändert an das getriebene Übertragungsglied weiterleitet,

Fig. 2 und 3 die Ausführungsform nach Fig. 1 mit veränderter Stellung des treibenden Übertragungsgliedes, wobei die Ausgangsdrehzahl herabgesetzt bzw. Null ist,

Fig. 4 eine Darstellung gemäss dem Pfeil A in Fig. 3, teilweise im Radialschnitt und teilweise in Ansicht,

Fig. 5–10 Einzelteile des getriebenen Übertragungsgliedes in Schnitt- und Ansichtsdarstellungen,

Fig. 11 eine zweite Ausführungsform eines Getriebes im Axialschnitt in der Stellung zur unveränderten Drehzahlübertragung,

Fig. 12 und 13 die Ausführungsform nach Fig. 11 mit veränderter Stellung des getriebenen Übertragungsgliedes, wobei die Ausgangsdrehzahl herabgesetzt bzw. Null ist,

Fig. 14 eine Darstellung gemäss dem Pfeil B in Fig. 11, teilweise im Schnitt und teilweise in Ansicht,

Fig. 15 eine Ansicht auf die Darstellung nach Fig. 14, jedoch in einer Stellung mit der Ausgangsdrehzahl Null,

Fig. 16 und 17 ein weiteres Ausführungsbeispiel im Axialschnitt.

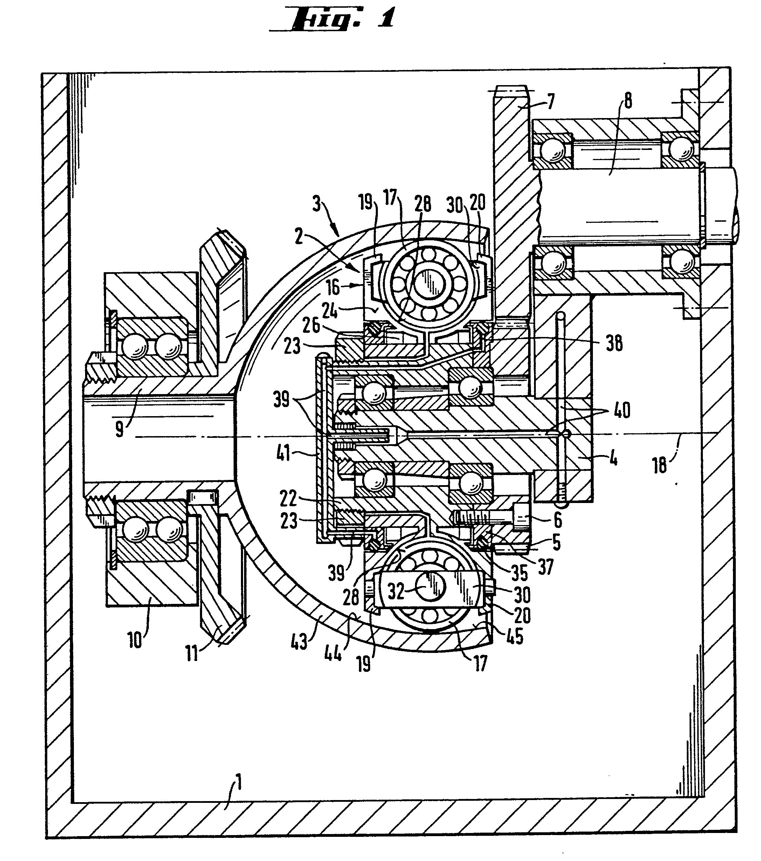

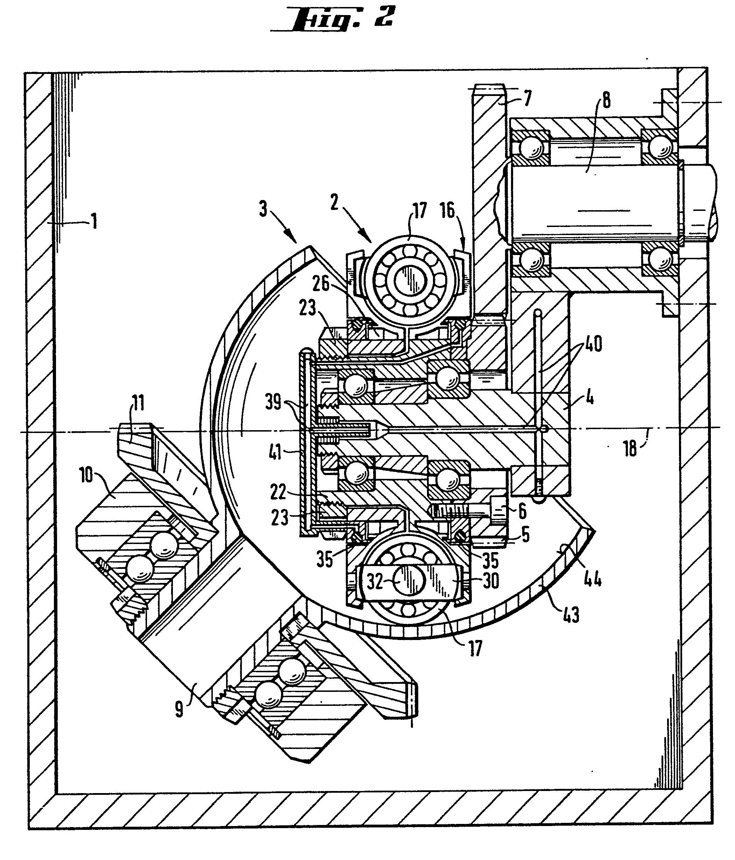

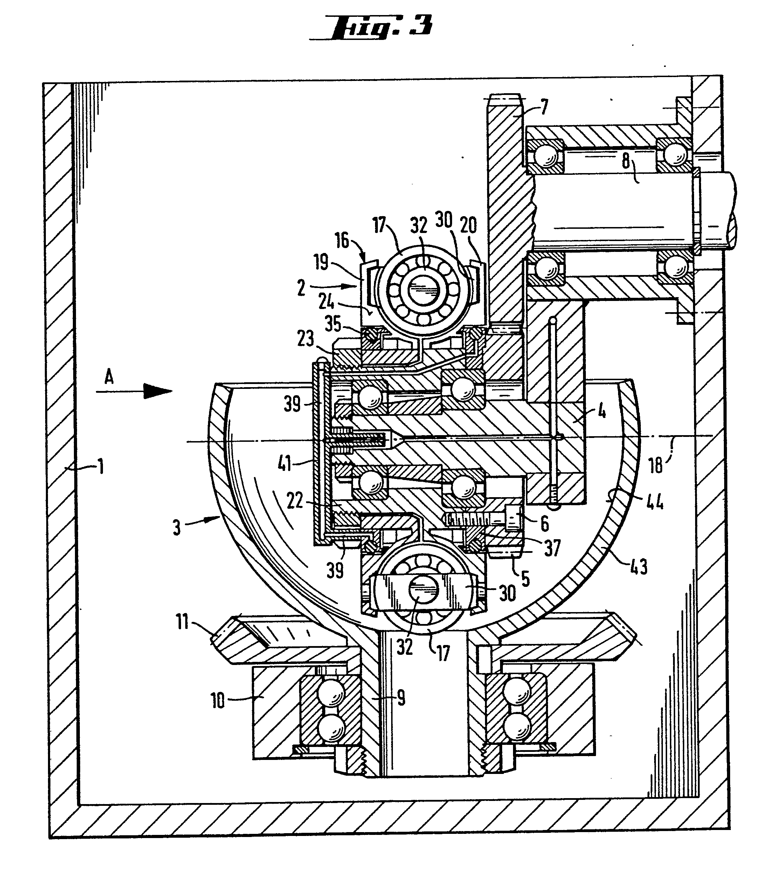

Nach Fig. 1 besteht die erste Ausführungsform des Getriebes aus dem üblichen Gehäuse 1 und weist ein erstes Übertragungsglied 2 sowie ein zweites Übertragungsglied 3 auf. Zum besseren Verständnis ist die Lagerung des zweiten Übertragungsgliedes 3 in den Fig. 1 bis 3 nur teilweise gezeichnet; in Fig. 4 ist sie vollständig dargestellt.

Das erste Übertragungsglied 2 ist drehbar auf einem mit dem Gehäuse 1 starr verbundenen Achskörper 4 gelagert und an einem Stirnzahnrad 5 z.B. mittels Schrauben drehfest montiert. Das Zahnrad 5 kämmt mit einem weiteren Zahnrad 7, das die Ausgangswelle 8 des Getriebes antreibt. Das zweite Übertragungsglied 3 ist über einen hohlen Wellenstumpf 9 in einer Nabe 10 frei drehbar gelagert und mit einem Kegelzahnrad 11 drehfest verbunden. Die Nabe 10 wiederum ist Bestandteil eines verschwenkbaren Stellbügels 12 (Fig. 4), der einerseits drehfest an einem im Gehäuse 1 gelagerten Verstellzapfen 13 befestigt und anderseits drehbar auf der Eingangswelle 14 des Getriebes gelagert ist, die auch das Kegelrad 15 zum Antrieb des Kegelrades 11 trägt. Die Schwenkachse des Bügels 12 verläuft durch die Drehachse des Übertragungsgliedes 2. In diesem Fall ist also das zweite Übertragungsglied 3 als das treibende Getriebeglied ausgebildet, während das erste Übertragungsglied 2 von dem Glied 3 angetrieben wird.

Im einzelnen besteht das erste Übertragungsglied 2 aus einem kreisförmigen Träger 16, der auf einem Kreis angeordnet eine Vielzahl von Querrollen 17 aufweist, deren verlängerte radiale Mittelebene durch die Drehachse 18 des Trägers 16 verläuft.

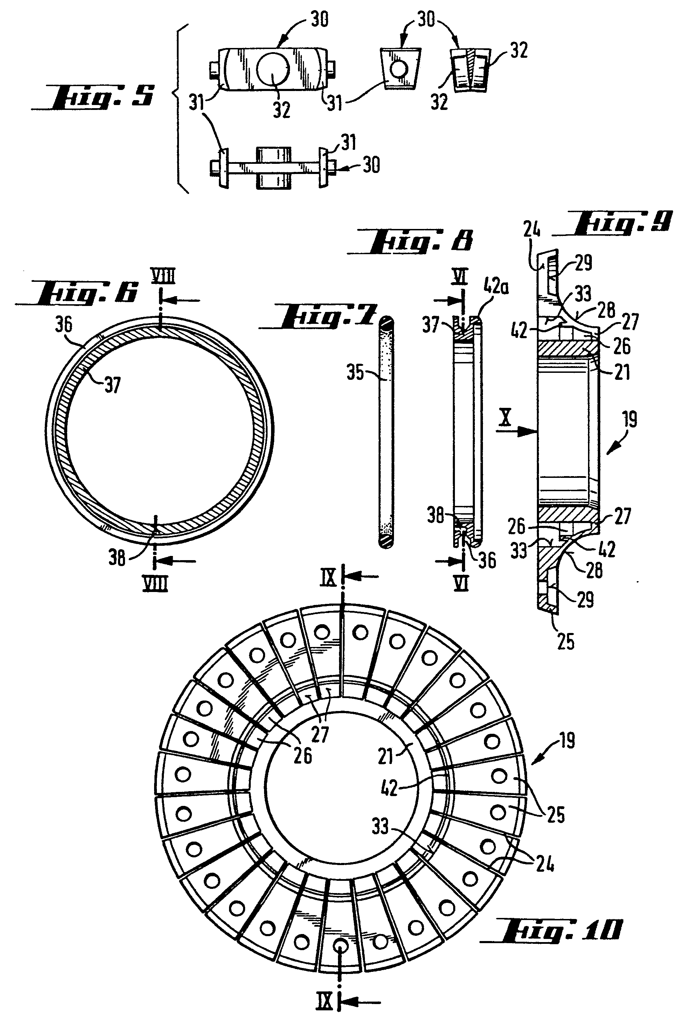

Nach dem ersten Ausführungsbeispiel besteht der Träger 16 aus zwei auf dem gemeinsamen Achskörper 4 frei drehbar gelagerten Kreisscheiben 19 und 20, die auf ihrer einander zugekehrten Seite in ihrem die Querrollen 17 tragenden Umfangsbereich zur Aufnahme der Querrollen ausgespart sind. In den Fig. 9 und 10 ist die Kreisscheibe 19 hinsichtlich ihres Aufbaus am besten zu erkennen. Mit ihrer Nabe 21 sitzt die Scheibe 19 auf einem Nabenfortsatz 22 der anderen Scheibe 20 und ist darauf mittels einer Nutringmutter 23 gesichert (Fig. 1). Die Scheiben 19, 20 sind durch von ihrem Aussenumfang radial nach innen verlaufende, achsparallele Trennschlitze 24 in sektorförmige Abschnitte 25 geteilt, wie dies am deutlichsten aus den Fig. 9 und 10 hervorgeht. Im übrigen ist der die Querrollen 17 tragende Umfangsbereich der Scheiben weiter so geformt, dass dieser Bereich hinter der Nabe 21 ausgespart ist, wie mit 26 angedeutet ist, und zwar derart, dass dieser Bereich nur über einen schmalen Körperquerschnitt 27, der durch die Trennschlitze 24 umfangsmässig unterbrochen ist, mit der Nabe 21 verbunden ist.

Die Scheiben 19, 20 weisen ferner die schon angedeuteten Aussparungen 28 auf, um den Querrollen 17, die beispielsweise aus Rillenkugellagern bestehen können, Platz zu bieten (Fig. 1 und 9). Die Aussparungen 28 sind mit Ausnehmungen 29 versehen, in denen Lagerkörper 30 für die Querrollen angeordnet sind. Ein solcher Lagerkörper 30 ist in Fig. 5 im einzelnen baulich gezeigt. Es ist klar zu erkennen, dass dieser Körper mit seinen Endbereichen 31 in den Ausnehmungen 29 der Scheiben 19, 20 zu liegen kommt und Zapfen 32 aufweist, auf welchen die Innenringe der Querrollen 17 sitzen.

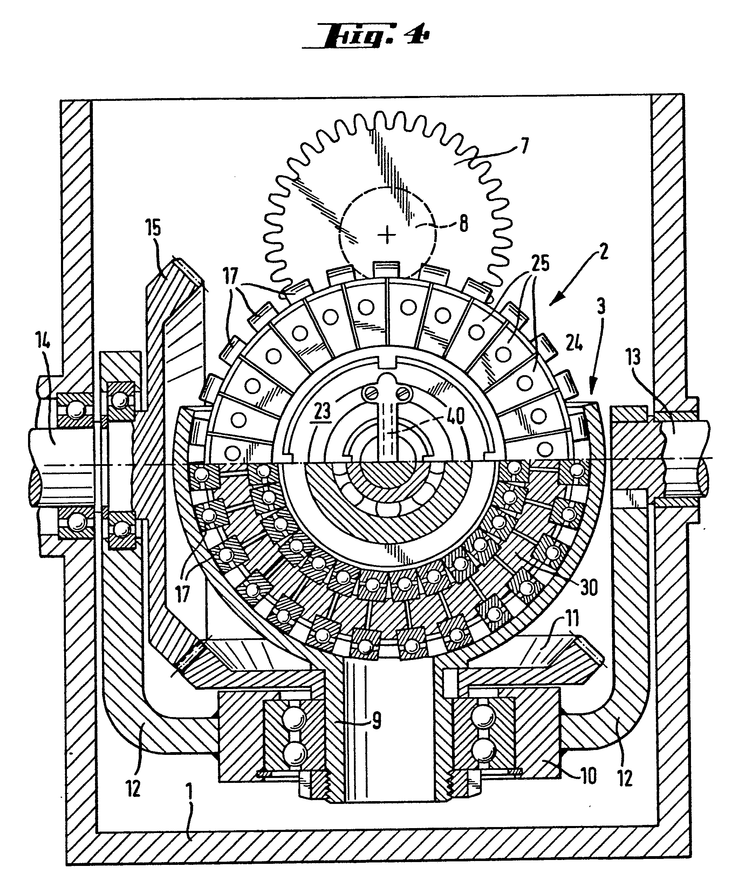

Die Scheiben 19, 20 weisen ferner je eine sich umfangsmässig erstreckende, an den sektorförmigen Abschnitten 25 befindliche Druckfläche 33 auf (Fig. 9), gegen die ein Druckkörper 35, der z. B. aus einem in Fig. 7 gezeigten O-Ring aus Gummi bestehen kann, unter Anwendung eines Druckfluids zur Anlage bringbar ist, wie noch klar wird. Der Druckkörper 35 liegt in einer Ringnut 36 eines Halterringes 37 (Fig. 6 und 8), der wiederum in den Aussparungen 26 der Scheiben eingesetzt ist (Fig. 1).

Ferner sind in den Scheiben 19, 20 und in den beiden Halterringen 37 Zuführungskanäle 38 für das Druckfluid vorgesehen, welche über Zuleitungskanäle 39 und 40 gespeist werden. Während der stationäre Kanal 40 im Achskörper 4 verläuft, sind die Kanäle 38 der Scheiben und der Halterringe über die Kanäle 39 eines Verbindungsteiles 41 mit dem Kanal 40 verbunden, das drehbar im Achskörper 4 gelagert ist (Fig. 1).

Der Druckkörper 35 bildet zusammen mit allen erwähnten Kanälen einschliesslich des Druckfluids, vorzugsweise ein Hydrauliköl, eine von aussen steuerbare Druckeinrichtung zur radialen Achslagenveränderung sämtlicher Querrollen 17 des Trägers 16 bzw. der Scheiben 19, 20. Im Normalzustand haben die Querrollen 17 keinen Kontakt mit dem zweiten Übertragungsglied 3. Wird das Druckfluid mit Druck beaufschlagt, gelangen die beiden Druckkörper 35 gegen die Druckflächen 33 der Scheiben zur Anlage und drücken nunmehr die sektorförmigen Abschnitte 25 um einen geringfügigen Betrag radial nach aussen. Die elastische Nachgiebigkeit der Abschnitte 25 wird durch die Bemessung der relativ kleinen Verbindungsquerschnitte 27 der Scheiben 19, 20 unter Berücksichtigung der Materialelastizität einschliesslich der Trennschlitze 24 bewirkt. Die Querrollen haben nun einen solchen Kontakt mit dem zweiten Übertragungsglied 3, dass dieses Glied sein Drehmoment mittels Reibschluss auf das erste Übertragungsglied übertragen kann.

Um die radiale Nachgiebigkeit der die Querrollen tragenden sektorförmigen Abschnitte zu begrenzen, um einer Zerstörung der beiden Übertragungsglieder 2 und 3 vorzubeugen, weisen die Scheiben 19, 20 im Bereich der Aussparungen 26 je einen ringförmigen, axial vorstehenden Vorsprung 42 auf. Entsprechend weisen die Halterringe 37 einen axial vorstehenden Anschlag 42a (Fig. 8 und 9) auf. Aus Fig. 1 ergibt sich klar die Funktion dieser Teile.

Das zweite Übertragungsglied 3 besteht aus einem Hohlkugelteil 43, das auf seiner Innenseite die sphärisch gekrümmte Arbeitsfläche 44 aufweist. Infolge des hohlen Wellenstumpfes 9 ist im Drehzentrum dieses Teils 43 kein Arbeitsflächenbereich gegeben, der aus Reibungsgründen auch nicht erwünscht ist. Der Hohlkugelrand ist innenseitig mit einer geringfügigen Umfangsabschrägung 45 versehen, die sich nach auswärts erweitert und im Betrieb den Eintritt der Querrollen 17 in den Hohlkugelteil 43 erleichtert. Ferner ergibt sich aus den Fig. 1–4, dass mit Ausnahme des freien Bereiches durch den Hohlwellenstumpf 9 im wesentlichen die gesamte Innenseite des Hohlkugelteils 43 als Arbeitsfläche zur Verfügung steht. Dies ergibt eine grösstmögliche Kraftangriffsfläche zur Übertragung des Drehmoments zwischen den beiden Übertragungsgliedern 2 und 3.

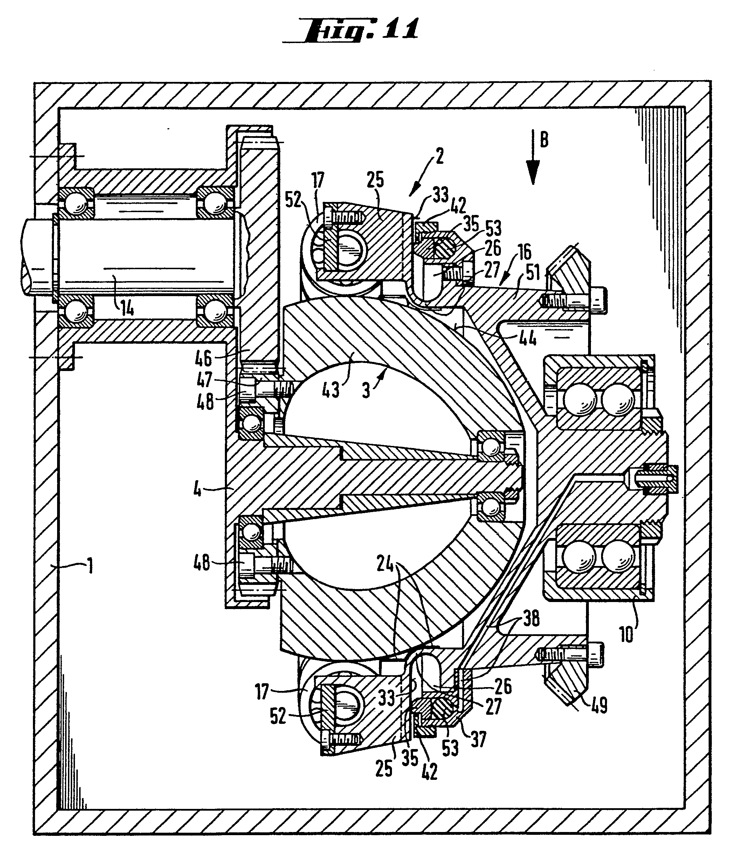

In den Fig. 11–15 ist eine zweite Ausführungsform des Getriebes dargestellt, die in ihrem Grundaufbau mit der vorstehend beschriebenen Ausführungsform identisch ist, so dass nur die abweichenden Merkmale erläutert und mit neuen Bezugsziffern bezeichnet sind.

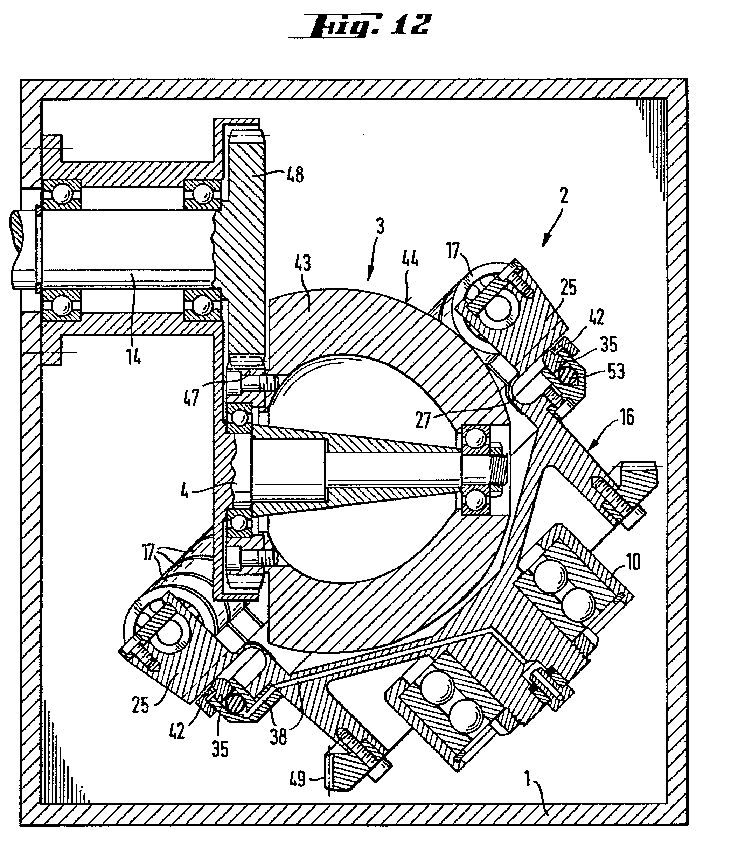

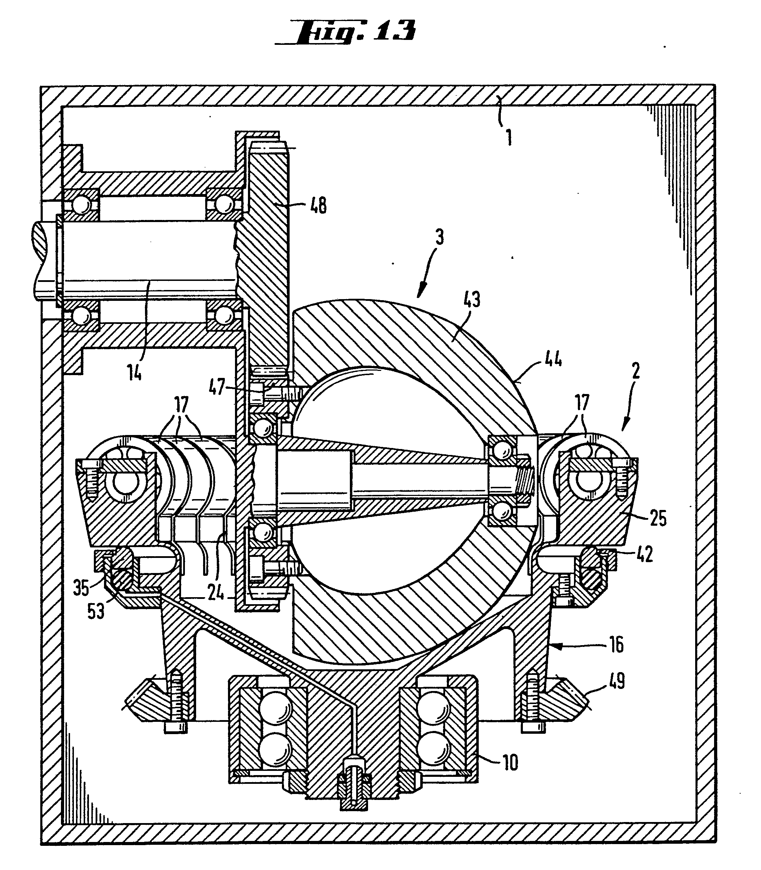

Auch in diesem Fall ist das zweite Übertragungsglied 3 das treibende Glied, das jedoch seine sphärische Arbeitsfläche 44 auf seiner Aussenseite aufweist, auf der die Querrollen 17 des ersten Übertragungsgliedes 2 reibschlüssig angreifen. Der weitere Hauptunterschied besteht darin, dass das erste Übertragungsglied zur Veränderung der Drehzahl verschwenkt wird (Fig. 12 und 13).

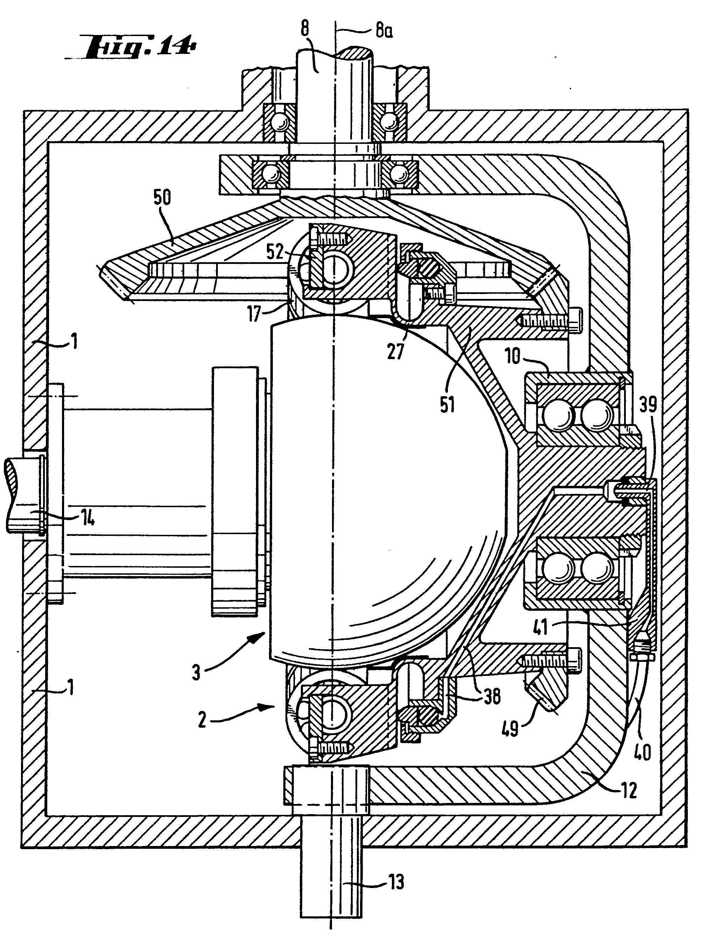

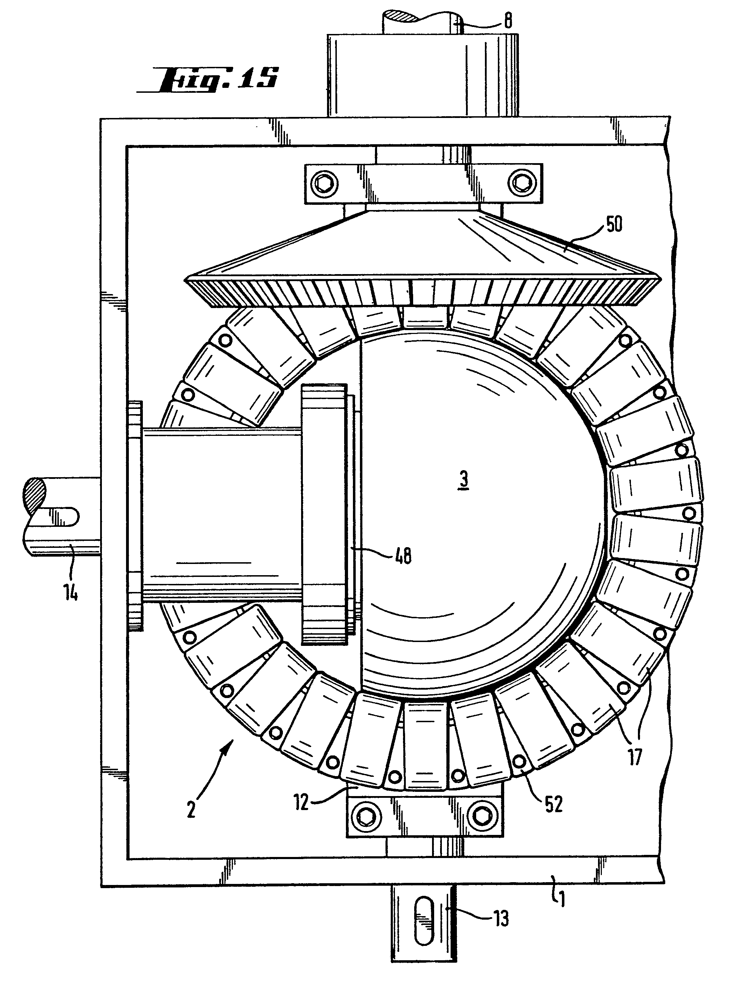

Zunächst folgt auf die Eingangswelle 14 eine Stirnradstufe aus den Zahnrädern 46 und 47, wobei letzteres mittels Schrauben 48 mit dem kugelförmigen zweiten Übertragungsglied 3 verbunden ist. Auf dem Achskörper 4 ist das Zahnrad 47 einerseits und das zweite Übertragungsglied anderseits frei drehbar gelagert. Mit dem Träger 16 des ersten Übertragungsgliedes 2 ist ein Kegelzahnrad 49 verschraubt, das mit dem Kegelzahnrad 50 der Ausgangswelle 8 kämmt (Fig. 14). Der den wälzgelagerten Träger 16 des ersten Übertragungsgliedes über die Nabe 10 tragende Bügel 12 ist in diesem Fall um die Drehachse 8a der Ausgangswelle 8 verschwenkbar gelagert (Fig. 14 und 15).

Der Träger 16 ist hier als ein die äussere sphärische Arbeitsfläche 44 des zweiten Übertragungsgliedes 3 mit Spiel umfassendes, trichterartiges Körperteil 51 ausgebildet, dessen Randbereich mittels der Trennschlitze 24 in Form der sektorförmigen Abschnitte 25 ausgestaltet ist. Entsprechende Ausnehmungen sind zur Aufnahme der Querrollen 17 einschliesslich ihrer Lagerteile in den Abschnitten 25 vorgesehen. Widerlager 52 verhindern ein Herausfallen der Querrollen. Die radiale Nachgiebigkeit der Abschnitte 25 wird auch hier durch schmale Verbindungsquerschnitte 27 in Verbindung mit den Trennschlitzen 24 und der Materialelastizität erzielt. Der Anschlag 42a ist stufenlos einstellbar, da er über ein Gewinde mit dem Haltering 37 verbunden ist. Der Haltering 37 führt in seiner Nut 36 den ringförmigen Druckkörper 35, der mittels des in den Kanälen 38, 39 und 40 sowie über einen Dichtungsring 53 zugeführten Druckfluids gegen die rückwärtigen Druckflächen 33 der sektorförmigen Abschnitte 25 gedrückt wird, wenn der Reibschluss der Querrollen 17 mit der Arbeitsfläche 44 hergestellt werden soll. Die Querrollen bewegen sich dann radial nach innen. Ferner wird auch bei diesem Beispiel im wesentlichen die gesamte äussere Oberfläche des kugelförmigen zweiten Übertragungsgliedes 3 als Arbeitsfläche verwendet.

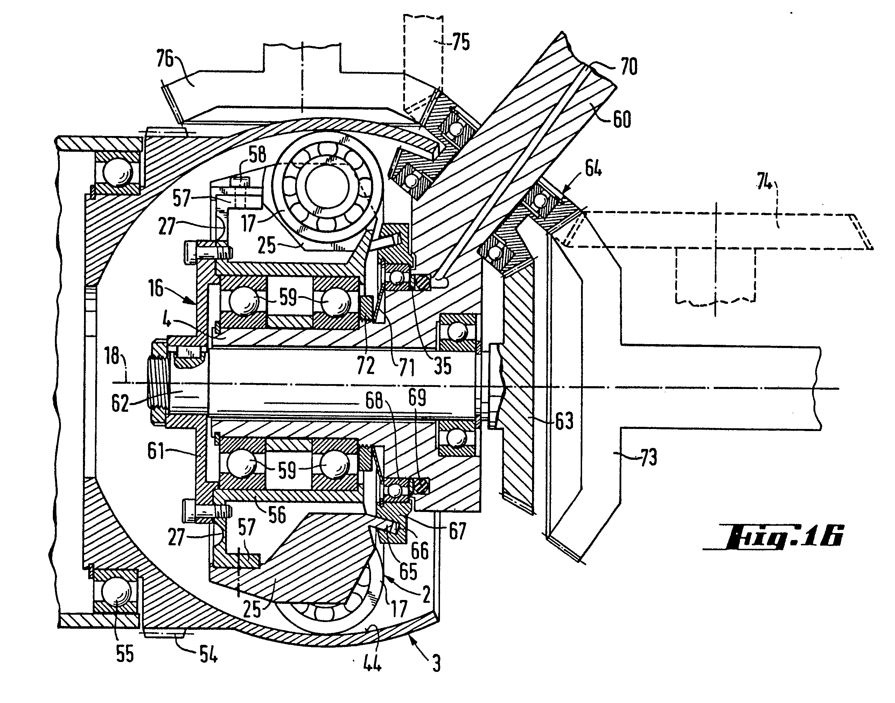

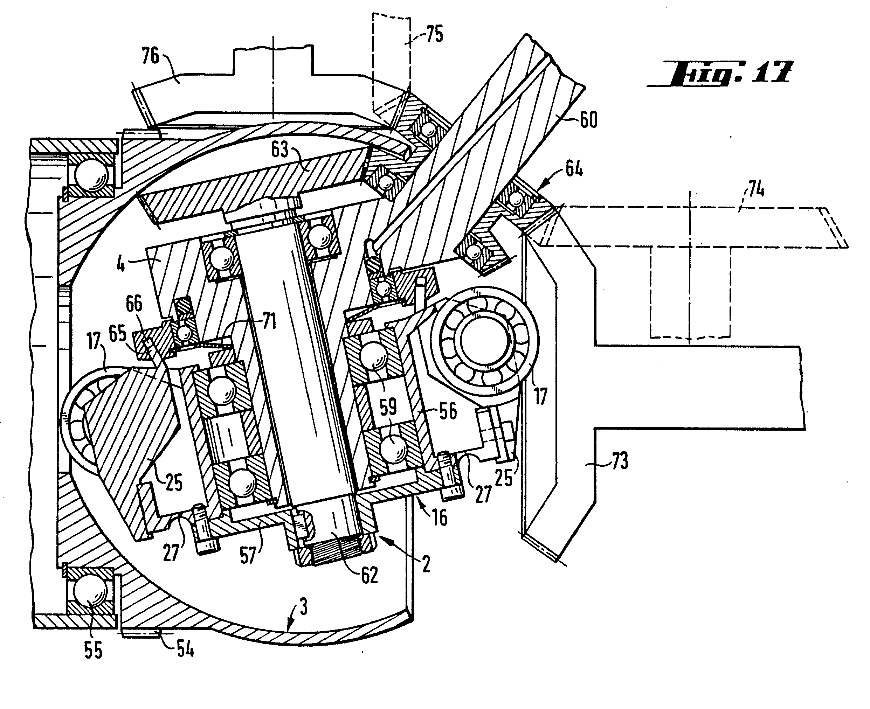

In den Fig. 16 und 17 ist eine weitere Ausführungsform gezeigt, bei der ebenfalls für gleiche Teile gleiche Bezugsziffern gelten.

Als treibendes Übertragungselement dient wieder das Übertragungsglied 3, das innenseitig die sphärische Arbeitsfläche 44 aufweist, während das Übertragungsglied 2 von diesem angetrieben wird. Das Glied 3 kann im Falle der Anwendung des Getriebes in einem Kraftfahrzeug oder dergleichen an Stelle der Motorschwungscheibe verwendet werden und einen Starterzahnkranz 54 sowie erforderlichenfalls auch ein weiteres Drehlager 55 aufweisen.

Das getriebene Übertragungsglied 2 ist im Aufbau ähnlich dem Übertragungsglied 2 in Fig. 1. Der Querrollenträger 16 weist eine Hülse 56 auf, die über einen radial geschlitzten Flansch 57 mit verringertem Querschnittsbereich 27 die dadurch radial nachgiebigen, die Querrollen 17 tragenden Anschnitte 25 trägt, die in diesem Beispiel als getrennte Teile ausgebildet und über Schrauben 58 mit dem Flansch 57 verbunden sind.

Die Hülse 56 ist mittels Wälzlager 59 auf dem Achskörper 4 gelagert, der in diesem Fall als Buchse ausgebildet und an einem Ende mit einer zur Drehachse 18 geneigten Verstellwelle 60 starr verbunden ist. Die Welle 60 ist in dem Getriebegehäuse gelagert, das der besseren Übersicht wegen bei diesem Beispiel weggelassen ist. Des weiteren ist die Hülse 56 mittels eines weiteren Flansches 61 drehfest mit einer den Achskörper 4 zentral durchdringenden Welle 62 verbunden, die an ihrem anderen Ende ein Kegelrad 63 trägt. Dieses Kegelrad 63 überträgt seine Drehbewegung auf eine frei drehbar auf der Verstellwelle 60 gelagerte Kegelradkombination 64, von welcher der weitere Abtrieb stattfindet, wie noch erläutert ist.

Die radial nachgiebigen Abschnitte 25 des Querrollenträgers 16 weisen in spitzem Winkel zur Drehachse 18 des Trägers 16 geneigte Stegteile 65 auf (Fig. 16), die in eine Ringnut 66 eines Druckringes 67 gleicher Neigung lose eingreifen. Der Druckring 67 sitzt auf einem Wälzlager 68, das wiederum axial beweglich auf dem buchsenartigen Achskörper 4 sitzt. Die Teile 65, 66, 67 und 68 sind Bestandteile der bereits erwähnten Druckeinrichtung, die auch hier den Druckkörper 35 aufweist, gegen den ein zusätzlicher Dichtungsring 69 anliegt, der vom Druck eines in einer Zuleitung 70 der Verstellwelle 60 vorgesehenen Druckfluids beaufschlagt wird.

Die Stegteile 65 und die Ringnut 66 des Druckringes 67 weisen also geneigte Flächen auf, denenzufolge bei axialer Bewegung des Druckringes eine radiale Bewegung der Abschnitte 25 erfolgt. Bei Fluiddruckanwendung bedeutet dies eine radiale Auswärtsbewegung der Querrollen 17 zwecks Erzielung eines Reibschlusses zwischen den Übertragungsgliedern 2 und 3.

Ferner ist eine Tellerfeder 71 vorgesehen, die einerseits gegen das Wälzlager 68 und anderseits gegen eine justierbaren Anschlag 72 anliegt. Der Anschlag 72, der mittels Gewinde auf dem Achskörper 4 einstellbar ist, begrenzt die axiale Bewegung des Druckringes 67 und damit die radiale Auswärtsbewegung der nachgiebigen Abschnitte 25. Es ist verständlich, dass, wenn die Fluiddruckbeaufschlagung entfällt, der Druckkörper 35 also entlastet ist, die Tellerfeder 71 den Druckring 67 zurückschiebt und dadurch zwangsläufig eine radiale Einwärtsbewegung der Abschnitte 25 bewirkt, wodurch der Reibschluss zwischen den Gliedern 2 und 3 aufgehoben ist. Dies ist besonders vorteilhaft bei Aufhebung des Reibschlusses bei hohen Drehzahlen, da dadurch den Fliehkräften der Abschnitte 25 mit den Querrollen 17 wirksam entgegengewirkt wird.

Von der Kegelradkombination 64 aus bestehen verschiedene Möglichkeiten für den weiteren Abtriebsverlauf; je nachdem, ob es sich um einen Front- oder Heckmotor in längs- oder quererfolgender Einbauweise handelt. Vier Beispiele seien hier aufgezählt:

1. Durch das Zahnrad 73 ergibt sich ein koaxialer Abtrieb für einen Front-Längsmotor;

2. durch das Zahnrad 74 ergibt sich ein Winkelabtrieb für den Front-Längsmotor für KFZ-Vorderradantrieb oder einen Heck-Längsmotor für PKW-Hinterradantrieb;

3. durch das Zahnrad 75 ergibt sich ein Parallelabtrieb für einen quereingebauten Front- oder Heckmotor;

4. durch das Zahnrad 76 ergibt sich ein Winkelabtrieb für einen quereingebauten Front-Motor für PKW-Hinterradantrieb.

Beachtenswert ist, dass für jede Motoreinbauversion kein zusätzlicher Zahnradsatz erforderlich ist, sondern es bleibt jeweils bei der Kegelradkombination 64 oder dergleichen.

Bei diesem Ausführungsbeispiel wird die stufenlose Drehzahlregelung durch Verdrehung des Übertragungsgliedes 2 mittels der Verstellwelle 60 um deren Längsachse vorgenommen. Fig. 16 zeigt die maximale Drehzahlübertragung, Fig. 17 die umgekehrte Drehrichtung (für den Rückwärtsgang) mit etwa 13% der Maximaldrehzahl bei einer Verdrehung der Verstellwelle 60 um 180°.

Um einen optimalen Reibschluss zwischen den beiden Übertragungsgliedern in jeder Relativstellung zu erhalten, ist es zweckmässig, das Druckfluid einer ständigen Steuerung seines Druckes zu unterwerfen. Dies kann unter Verwendung eines Computers geschehen. Dabei kann die Steuerung in Abhängigkeit der Winkelstellung des ersten Übertragungsgliedes zum anderen Übertragungsglied und/oder in Abhängigkeit des gewünschten Grössenbetrages der Anpresskraft zwischen den beiden fraglichen Übertragungsgliedern erfolgen. Insbesondere letzteres ist vorteilhaft hinsichtlich Materialüberbeanspruchungen.

Die Übertragung der Drehzahlen zwischen derartigen Übertragungsgliedern ist bekannt. Liegen die Drehachsen dieser beiden Glieder auf einer gemeinsamen Linie, ist das Drehzahlverhältnis eins zu eins. Wird das verschwenkbare Übertragungsglied winkelig verstellt, nimmt die Drehzahl der Ausgangswelle ab und ist bei 90°-Stellung der Drehachsen gleich Null. Wird das verschwenkbare Übertragungsglied über 90° hinaus verstellt, was vom noch zur Verfügung stehenden Platz abhängt, nimmt die Drehzahl wieder zu, jedoch ist dabei die Drehrichtung der Ausgangswelle umgekehrt.

Mit dem wie vorstehend beschrieben ausgebildeten Getriebe kann also die Anpresskraft zwischen den Übertragungsgliedern 2 und 3 willkürlich verändert werden, woraus die schon erwähnten Vorteile resultieren. Unter Willkürlichkeit soll auch verstanden sein, dass, wenn die Übertragungsglieder bei hoher Drehzahl mittels der fraglichen Druckeinrichtung erfindungsgemäss ausser Eingriff gebracht werden, die Federeinrichtung 71 ihren Anteil dazu leistet, indem sie der Fliehkraftwirkung des Übertragungsgliedes 2 entgegentritt.

Obwohl vorstehend die Verwendung eines Druckfluidsystems als Verstellantrieb für die Achslage der Querrollen 17 als bevorzugt beschrieben ist, kann die Durchführung der radialen Bewegung der Querrollen auch auf elektrischem, magnetischem, rein mechanischem, wärmetechnischem Wege sowie aufgrund einer Kombination dieser Mittel erfolgen.

## Patentansprüche

1. Stufenlos regelbares Getriebe mit einem ersten Übertragungsglied (2), dieses bestehend aus einem drehbaren Träger (16) mit auf einem Kreis angeordneten, anschlagbegrenzten, frei drehbaren Querrollen (17), deren verlängerte radiale Mittelebene durch die Trägerdrehachse (18) verläuft, mit einem zweiten Übertragungsglied (3) mit einer sphärisch gekrümmten Arbeitsfläche (44), an der die Querrollen (17) reibschlüssig angreifen, wobei die gewünschte Drehzahl des jeweils mit der Abtriebswelle verbundenen Übertragungsgliedes durch Änderung der Relativstellung der beiden Übertragungsglieder (2, 3) zueinander einstellbar ist, dadurch gekennzeichnet, dass die Achslage der Querrollen (17) im Querrollenträger (16) willkürlich radial veränderbar ist.

2. Getriebe nach Anspruch 1, dadurch gekennzeichnet, dass zur Veränderung der Achslage der Querrollen (17) radial nachgiebig mit dem Querrollenträger (16) verbundene Abschnitte (25) vorgesehen sind, die die Querrollen tragen, und dass eine mit den Abschnitten (25) zusammenwirkende, steuerbare Druckeinrichtung (35, 36, 37, 38; 65, 66, 67, 68, 35, 69, 70) vorgesehen ist.

3. Getriebe nach Anspruch 2, dadurch gekennzeichnet, dass ein Teil (67) der Druckeinrichtung (66 usw.) und die radial nachgiebigen Abschnitte (25) zur Drehachse des Querrollenträgers (16) geneigte Flächen (65, 66) zur radialen Verstellung der Abschnitte (25) aufweisen.

4. Getriebe nach den Ansprüchen 2 oder 3, dadurch gekennzeichnet, dass eine vorzugsweise justierbare Rückstellfeder (71) vorgesehen ist, die bei entlasteter Druckeinrichtung (65 usw.) eine Rückstellkraft für die Rückstellung der Abschnitte (25) des Querrollenträgers (16) bewirkt.

5. Getriebe nach den Ansprüchen 2 und 3, dadurch gekennzeichnet, dass die Druckeinrichtung aus einem fluidisch beaufschlagbaren, beweglichen Druckkörper (35), einem vom Druckkörper axial bewegbaren Wälzlager (68), einem auf dem Wälzlager sitzenden Druckring (67) mit einer Ringnut (66) und aus Stegteilen (65) der Abschnitte (25) besteht, wobei Ringnut und Stegteile lose ineinandergreifen und die geneigten Flächen aufweisen.

6. Getriebe nach den Ansprüchen 2 bis 5, dadurch gekennzeichnet, dass die Rückstellfeder (71) zur Ausführung der Rückstellbewegung der Abschnitte (25) gegen ein Teil (68) der Druckeinrichtung anliegt.

7. Getriebe nach Anspruch 2, dadurch gekennzeichnet, dass die Druckeinrichtung zur Achslagenveränderung der Querrollen (17) aus einem fluidisch beaufschlagbaren, beweglichen Druckkörper (35), der gegen die Druckflächen (33) der Abschnitte (25) zur Anlage bringbar ist, und aus im Querrollenträger (16) vorgesehenen Zuführungskanälen (38, 39, 40) für das Druckfluid besteht.

8. Getriebe nach wenigstens einem der Ansprüche 1 bis 7, dadurch gekennzeichnet, dass der Querrollenträger (16) aus zwei auf einem gemeinsamen Achskörper (4) frei drehbar gelagerten Kreisscheiben (19, 20) besteht, die auf ihrer einander zugekehrten Seite im Bereich der Abschnitte (25) zur Aufnahme der Querrollen (17) einschl. deren Lageranordnung (30) ausgespart sind.

9. Getriebe nach wenigstens einem der Ansprüche 1 bis 8, bei dem das die Querrollen tragende erste Übertragungsglied (2) in das als Hohlkugel mit innerer sphärischer Arbeitsfläche ausgebildete zweite Übertragungsglied (3) eingreift, dadurch gekennzeichnet, dass das zweite Übertragungsglied (3) mittels einer verschwenkbaren Kegelradstufe (11, 15) drehantreibbar ausgebildet ist, und dass die gesamte Innenfläche der Hohlkugel (43) des Gliedes (3) mit Ausnahme ihres im Zentrum der Kugeldrehachse gelegenen Bereiches als Arbeitsfläche (44) ausgebildet ist.

10. Getriebe nach wenigstens einem der Ansprüche 1 bis 9, dadurch gekennzeichnet, dass die von ausserhalb des Getriebes her betätigbare Druckeinrichtung (35 bis 38) zwecks Einstellung der den Reibschluss zwischen den beiden Übertragungsgliedern (2, 3) herstellenden Kraft in Abhängigkeit von der jeweiligen Winkelstellung des verschwenkbaren Übertragungsgliedes und/oder von der gewünschten Anpressstärke der vorerwähnten Kraft zwangsgesteuert ist.

11. Getriebe nach Anspruch 10, dadurch gekennzeichnet, dass für die Steuerung ein Computer vorgesehen ist.

12. Getriebe nach wenigstens einem der Ansprüche 1 bis 11, dadurch gekennzeichnet, dass das zweite Übertragungsglied (3) als Schwungscheibe einer Kraftmaschine verwendet wird.

13. Getriebe nach wenigstens einem der Ansprüche 1 bis 12, dadurch gekennzeichnet, dass der Anschlag (42a, 72) zur Begrenzung der radialen Eingriffsbewegung der Querrollen (17) des Querrollenträgers (16) einstellbar ist.

## Claims

1. Steplessly variable transmission with a first transmission member (2), the latter consisting of a rotatable carrier (16) with freely rotatable transverse rollers (17) which are arranged in a circle and are stoplimited and the prolonged radial plane of which passes through the axis (18) of rotation of the carrier, and with a second transmission member (3) having a spherically curved working face (44) on which the transverse rollers (17) engage frictionally, and the desired speed of the transmission member which is connected, at any given time, to the output shaft can be adjusted by changing the relative position of the two transmission members (2, 3) to one another, characterized in that the position of the axis of the transverse rollers (17) in the transverse-roller carrier (16) can be varied radially at random.

2. Transmission according to Claim 1, characterized in that there are provided to vary the axial position of the transverse rollers (17) sections (25) which are connected radially resiliently to the transverse-roller carrier (16) and which carry the transverse rollers, and in that a controllable pressure device (35, 36, 37, 38; 65, 66 , 67, 68, 35, 69, 70) which interacts with the sections (25) is provided.

3. Transmission according to Claim 2, characterized in that a part (67) of the pressure device (66 etc.) and the radially resilient sections (25) have faces (65, 66) which are inclined to the axis of rotation of the transverse-roller carrier (16), for the radial adjustment of the sections (25).

4. Transmission according to Claim 2 or 3, characterized in that there is provided a preferably adjustable restoring spring (71) which, when the pressure device (65 etc.) is relieved, applies a restoring force to restore the sections (25) of the transverse-roller carrier (16).

5. Transmission according to Claims 2 and 3, characterized in that the pressure device consists of a movable pressure body (35) which can be stressed with fluid, of a roller bearing (68) which can be moved axially by the pressure body, of a thrust ring (67) seated on the roller bearing and, having an annular groove (66) and of web portions (65) of the sections (25), the annular groove and web portions engaging loosely in one another and having the inclined faces.

6. Transmission according to Claims 2 to 5, characterized in that, to execute the restoring movement of the sections (25), the restoring spring (71) bears against a part (68) of the pressure device.

7. Transmission according to Claim 2, characterized in that the pressure device for varying the axial position of the transverse rollers (17) consists of a movable pressure body (35) which can be stressed with fluid and which can be brought to bear against the pressure faces (33) of the sections (25), and of feed channels (38, 39, 40) for the hydraulic fluid which are provided in the transverse-roller carrier (16).

8. Transmission according to at least one of Claims 1 to 7, characterized in that the transverse-roller carrier (16) consists of two circular discs (19, 20) which are mounted freely rotatably on a common axle body (4) and which are recessed, on their sides facing one another, in the region of the sections (25), to receive the transverse rollers (17) including the bearing arrangement (30) of these.

9. Transmission according to at least one of Claims 1 to 8, in which the first transmission member (2) carrying the transverse rollers engages into the second transmission member (3) which is designed as a hollow sphere with an inner spherical working face, characterized in that the second transmission member (3) is designed so that it can be driven rotatably by means of a pivotable bevel-gear stage (11, 15), and in that the entire inner face of the hollow sphere (43) of the member (3), with the exception of its region located in the center of the axis of rotation of the sphere, is designed as a working face (44).

10. Transmission according to at least one of Claims 1 to 9, characterized in that, for the purpose of establishing the force which provides the frictional engagement between the two transmission members (2, 3), the pressure device (35 to 38) which can be actuated from outside the transmission is positively controlled as a function of the respective angular position of the pivotable transmission member and/or of the desired contact pressure of the abovementioned force.

11. Transmission according to Claim 10, characterized in that a computer is provided for the control.

12. Transmission according to at least one of Claims 1 to 11, characterized in that the second transmission member (3) is used as a flywheel of a power engine.

13. Transmission according to at least one of the Claims 1 to 12, characterized in that the stop (42a; 72) for limiting the axial movement of action of the transverse rollers (17) of the transverse-roller carrier (16) is adjustable.

**Revendications**

1. Mécanisme de transmission à réglage continu comportant un premier organe de transmission (2), qui se compose d'un support rotatif (16) avec des galets transversaux (17) disposés sur un cercle, limités par des butées et capables de tourner librement, dont le plan médian prolongé passe par l'axe de rotation (18) du support, et un deuxième organe de transmission (3) accusant une surface de travail sphérique (44), contre laquelle lesdits galets transversaux (17) s'appuient sous pression de manière à provoquer une friction suffisante pour l'entraîner, le nombre de tours voulu de l'organe de transmission accouplé à l'arbre de sortie étant réglable par variation de la position relative des deux organes de transmission (2, 3) l'un par rapport à l'autre, caractérisé en ce que la position des axes des galets transversaux (17) dans leur support (16) peut être modifiée radialement à volonté.

2. Mécanisme de transmission selon la revendication 1, caractérisé en ce que pour le modification de la position des axes des galets transversaux (17) sont prévues des secteurs (25), fixés de manière souple en sens radial audit support (16) des galets transversaux qu'ils portent, et en ce qu'est prévu un dispositif de pression (35–38, 65–68, 35, 69, 70) susceptible d'être commandé et coopérant avec ces secteurs (25).

3. Mécanisme de transmission selon la revendication 2, caractérisé en ce qu'une pièce (67) dudit dispositif de pression (66 etc.) et lesdits secteurs (25) souples en sens radial présentent des surfaces (65, 66) inclinées par rapport à l'axe de rotation du support (16) des galets transversaux, en vue du déplacement radial des secteurs (25).

4. Mécanisme de transmission selon la revendication 2 ou 3, caractérisé en ce qu'il est muni d'un ressort de rappel (71) de préférence réglable, qui, lorsque le dispositif de pression (65, etc.) est détendu, produit une force de rappel suffisante pour la remise en arrière desdits secteurs (25) du support (16) des galets transversaux.

5. Mécanisme de transmission selon les revendications 2 et 3, caractérisé en ce que le dispositif de pression se compose d'un corps de pression mobile (35), qui peut être mis sous pression par un liquide, d'un roulement (68) susceptible d'être déplacé axialement par le corps de pression, d'une bague de pression (67) présentant une rainure annulaire, montée sur le roulement et de parties en saillie (65) des sections (25), la rainure annulaire et les parties en saillie étant engagées les unes dans l'autre sans serrage et présentant des surfaces inclinées.

6. Mécanisme de transmission selon les revendications 2 à 5, caractérisé en ce que le ressort de rappel (71) pour l'exécution du mouvement en arrière des sections (25) appuie contre une pièce (68) du dispositif de pression.

7. Mécanisme de transmission selon la revendication 2, caractérisé en ce que le dispositif de pression pour le changement de position des axes des galets transversaux (71) se compose d'un corps de pression (35) mobile, susceptible d'être mis sous pression au moyen d'un liquide et d'être amené en appui contre les surfaces de pression (33) des sections (25), ainsi que de canaux (38, 39, 40) pour l'amenée du liquide de pression dans le support (16) des galets transversaux.

8. Mécanisme de transmission selon une au moins des revendications 1–7, caractérisé en ce que le support (16) des galets transversaux se compose de deux disques circulaires (19, 20), montés à rotation libre sur un corps d'arbre commun (4), disques dont les faces qui se regardent sont évidées au niveau desdits secteurs (25) pour recevoir les galets transversaux (17) avec leurs paliers (30).

9. Mécanisme de transmission selon une au moins des revendications 1–8, dont le premier organe de transmission (2), qui porte les galets transversaux, s'engage dans le deuxième organe de transmission (3) réalisé sous forme de sphère creuse à surface de travail intérieure sphérique, caractérisé en ce que le deuxième organe de transmission (3) est conçu de manière à pouvoir être mis en rotation par un jeu de roues dentées coniques (11, 15) pivotable et que toute la surface intérieure de la sphère creuse (43), à l'exception de la zone située au centre de l'arbre de rotation de la sphère, fait office de surface de travail (44).

10. Mécanisme de transmission selon une au moins des revendications 1–9, caractérisé en ce que le dispositif de pression (35–38), susceptible d'être commandé de l'extérieur, est commandé par un dispositif de commande forcée, afin de produire la force requise pour engendrer la friction d'entraînement entre les deux organes de transmission (2, 3) en fonction de la position angulaire de l'organe de transmission pivotable et/ou de la pression d'appui exercée par ladite force.

11. Mécanisme de transmission selon la revendication 10, caractérisé en ce que cette commande s'effectue à l'aide d'un ordinateur.

12. Mécanisme selon une au moins des revendications 1–11, caractérisé en ce que le deuxième organe de transmission (3) est employé comme volant d'un moteur.

13. Mécanisme de transmission selon une au moins des revendications précédentes 1–12, caractérisé en ce que la butée (42a, 72), destinée à limiter le mouvement d'attaque radial des galets transversaux (17) du support (16) est réglable.

# Fig. 1

**Fig. 2**

# *Fig. 3*

# Fig. 4

**Fig. 5**

**Fig. 6**

**Fig. 7**

**Fig. 8**

**Fig. 9**

**Fig. 10**

# Fig. 11

# Fig. 12

# Fig. 13

**Fig. 14.**

Fig. 15

Fig.16

Fig. 17